# EUROPÄISCHE PATENTSCHRIFT

(11) **EP 2 008 162 B1**
(45) Veröffentlichungstag und Bekanntmachung des Hinweises auf die Patenterteilung: **11.01.2012**
(21) Anmeldenummer: 07724331.9
(22) Anmeldetag: 18.04.2007
(51) Int. Cl.: G05B 19/042, G05B 19/418, F04B 49/06

(54) **KREISELPUMPENAGGREGAT MIT SCHALTVORRICHTUNG**
CENTRIFUGAL PUMP UNIT WITH SWITCHING DEVICE
ENSEMBLE POMPE CENTRIFUGE POURVU D'UN DISPOSITIF DE COMMUTATION

(30) Priorität: 19.04.2006 DE 102006018025
(43) Veröffentlichungstag der Anmeldung: 31.12.2008
(73) Patentinhaber: KSB Aktiengesellschaft, 67227 Frankenthal (DE)
(72) Erfinder: SILOVIC, Marjan, 67227 Frankenthal (DE)
(86) Internationale Anmeldenummer: PCT/EP2007/003394
(87) Internationale Veröffentlichungsnummer: WO 2007/118706

(56) Entgegenhaltungen:
- DE-A1- 19 842 565
- US-A- 4 503 371
- US-A- 4 566 289
- US-A- 5 540 555
- KÖHLER, B.; MEWES, F.: "Mechatronisches Pumpensystem mit intelligenten, integrierten Antrieben" KONSTRUKTION, Bd. 6-2000, Juni 2000 (2000-06), Seiten 27-29, XP009088863 SPRINGER-VDI-VERLAG Gefunden im Internet: URL:http://www.technikwissen.de/kon/articl e.php?data%5Barticle_id%5D=12857&PHPSESSID =8bbdb0dc500f4bd37c1a43d83e9f51ce> [gefunden am 2007-08-30]
- "SIRIUS MOTORMANAGEMENT" SIEMENS, [Online] April 2005 (2005-04), Seiten 3/1-3/26, XP002448440 Gefunden im Internet: URL:http://www.siemens.cz/siemjetstorage/f iles/15002_LV10$de$News2$SIMOCODE$050411$m it$Umschlag.pdf> [gefunden am 2007-08-28]

## Beschreibung

Die Erfindung betrifft ein Kreiselpumpenaggregat, bestehend aus Pumpe und Antriebsmotor, mit einer Schaltvorrichtung, wobei die Schaltvorrichtung mit einem Anschluss für ein erstes, festfrequentes Spannungsnetz versehen ist und mit einem durch einen Mikrorechner gesteuerten Schaltmittel den Antriebsmotor an dem ersten Spannungsnetz drehzahlfest betreibt, indem das Schaltmittel während des drehzahlfesten Betriebs den Antriebsmotor mit dem Anschluss für das erste Spannungsnetz verbindet.

Aus Köhler, B.; Mewes, F. : "Mechatronisches Pumpensystem mit intelligenten, integrierten Antrieben", veröffentlicht in Konstruktion, Bd. 6-2000, Seiten 27-29, ist eine Anordnung von Kreiselpumpenaggregaten mit integrierten, drehzahlgeregelten Antriebssystemen bekannt. Jedes Kreiselpumpenaggregat besteht aus einer Kreiselpumpe und einem drehzahlgeregelten Integralantrieb. Der Integralantrieb besteht aus Asynchronmotor und aufmontiertem Frequenzumrichter mit Regelelektronik.

Die DE 198 42 565 A1 beschreibt eine Pumpenanordnung zur Druckregelung mit mindestens zwei parallel geschalteten Kreiselpumpen für die mengenvariable Förderung von Flüssigkeiten in Rohrleitungssystemen. Ein zentrales Mikroprozessorsystem ermittelt beim Aktivieren oder Deaktivieren einer oder mehrerer Regelpumpen das regelungstechnische Verhalten des Rohrleitungssystems und nimmt innerhalb vorgegebener Grenzwerte eine automatische Anpassung der Reglerparameter vor.

Durch die US-A-5 540 555 ist ein ferngesteuertes Druckregelsystem für variable Verbraucher bekannt. Zwei parallel geschaltete, drehzahlvariable Sekundärpumpen versorgen dabei die in verschiedenen Zweigen eines Hydrauliksystems angeordneten Verbraucher mit dem benötigten Förderdruck und Fördermenge. Mehrere Drucksensoren erfassen den Druck in den jeweiligen Zweigen des Hydrauliksystems und den Versorgungsdruck.

Im Online-Katalog "Sirius Motormanagement" Siemens, April 2005, Seiten 3/1 bis 3/26 werden Schaltgeräte der Reihe Simocode pro beschrieben. Mit verschiedenen, in Form von Hutschienenmodulen gestalteten Gerätemodulen können in einem Schaltschrank verschiedene Motormanagement-Systeme für Motoren mit konstanter Drehzahl konfiguriert werden. Als Basiskomponente stehen zwei Grundgeräte zur Verfügung, die über Verbindungskabel mit weiteren Modulen zur Überwachung oder Bedienung zu verbinden sind, was einen entsprechenden Verdrahtungsaufwand bedingt.

Die US-A-4 566 289 offenbart ein Regelsystem für einen Kühlschrank. Eine Kompressor-Antriebsmotor-Einheit des Kühlschranks wird dabei an einer handelsüblichen Netzspannung betrieben. In einer Schnellgefrierbetriebsart des Kühlschranks wird die Kompressor-Antriebsmotor-Einheit über eine Inverterschaltung versorgt, um das Gefriervermögen des Kühlschranks variabel zu machen. In normaler Betriebsart wird die Kompressor-Antriebsmotor-Einheit direkt mit der Netzspannung versorgt.

Durch die DE-A-27 56 916 ist ein gattungsgemäßes Kreiselpumpenaggregat und eine Anordnung parallel betriebener Kreiselpumpenaggregate bekannt. Solche Anordnungen von Kreiselpumpenaggregaten finden sich in den verschiedensten Rohrleitungssystemen, bei denen ein bestimmter Förderdruck aufrechterhalten werden soll. Eine einzelne drehzahlvariable Kreiselpumpe ist in Verbindung mit einem linearen PID-Regler und einem Frequenzumrichter als Regelpumpe für die Aufrechterhaltung eines Förderdruckes verantwortlich. Bei Änderung des Förderbedarfs, der außerhalb des Leistungsbereichs dieser drehzahlvariablen Regelpumpe liegt, werden bei Unterdruck Zusatzpumpen zugeschaltet und bei Überdruck abgeschaltet. Diese laufen mit gleichbleibender Drehzahl und liefern bei gleichen Druckverhältnissen eine konstante Fördermenge. Die Zusatzpumpen mit fester Drehzahl weisen einen einfacheren Aufbau auf als eine drehzahlgeregelte Regelpumpe mit deren speziellem Antriebsmotor, der mit einem Steuerwerk und einem komplexen Regler zu verbinden ist.

Für solche Mehrpumpenanordnungen hält ein Hersteller im Aufbau unterschiedliche Kreiselpumpenaggregate bereit. Des Weiteren ist für solche Anordnungen ein erheblicher elektrischer Verdrahtungsaufwand erforderlich, um mehrere Kreiselpumpenaggregate sicher anzuschließen und zuverlässig in ein komplexes Regelsystem einzubinden. Ein weiterer Nachteil dieser Anordnung ist deren Abhängigkeit von dem zentralen Mikrorechner, von dessen Ausfall die komplette Mehrpumpenanordnung betroffen wäre.

Der Erfindung liegt das Problem zugrunde, ein Kreiselpumpenaggregat zu entwickeln, welches wahlweise als drehzahlfestes oder drehzahlgeregeltes Kreiselpumpenaggregat, im Einzelbetrieb oder in einer Mehrpumpenanlage mit geringem Verdrahtungsaufwand einsetzbar ist und bei flexibler Erweiterbarkeit einen ausfallsicheren Betrieb unterstützt.

Die Lösung dieses Problems sieht vor, dass der Mikrorechner in die Schaltvorrichtung integriert ist, dass die Schaltvorrichtung mit mindestens einem Signaleingang und Anschlüssen für mindestens ein serielles Bussystem versehen ist, dass der Mikrorechner mit dem Signaleingang und den Anschlüssen des Bussystems verbunden ist und dass im Antriebsmotor und/oder der Schaltvorrichtung ein Bussignale durchleitendes Mittel mit dem Mikrorechner und mit den Anschlüssen des Bussystems verbunden ist, dass die Schaltvorrichtung mit einem Anschluss für ein zweites, vom ersten Spannungsnetz verschiedenes Spannungsnetz und mit einem zusätzlichen, von dem Mikrorechner gesteuerten Schaltmittel versehen ist, dass das zusätzliche Schaltmittel mit dem Anschluss für das zweite Spannungsnetz verbunden ist und dass die Schaltmittel getrennt schaltbar sind und den Stromfluss für den Antriebsmotoranschluss und/oder den Antriebsmotor derart schalten, dass der Antriebsmotoranschluss und/oder der Antriebsmotor wahlweise mit dem Anschluss für das erste Spannungsnetz und/oder mit dem Anschluss für das zweite Spannungsnetz verbindbar oder trennbar ist.

Ein solcher standardisierter Aufbau des Antriebsmotors mit integrierten Schaltmitteln und Mikrorechner und der Möglichkeit zur Anbindung an ein serielles Bussystem erweitert den Einsatzbereich von damit ausgerüsteten Kreiselpumpenaggregaten bei gleichzeitiger Verringerung des Installationsaufwandes und dadurch, dass die Schaltvorrichtung mit einem Anschluss für ein zweites Spannungsnetz versehen ist, ist ein solches Kreiselpumpenaggregat mit verschiedenen Spannungsnetzen verbindbar.

Die Anordnung der Schaltmittel in den Antriebsmotor spart Schaltschrankplatz ein und durch den integrierten Mikrorechner wird die Abhängigkeit von einer zentralen, übergeordneten Steuerung verhindert. Dies verbessert die Ausfallsicherheit eines solchen Kreiselpumpenaggregates.

Nach der Erfindung schalten die Schaltmittel den Antriebsmotor zwischen verschiedenen Spannungsnetzen oder zwischen Spannungsnetzen mit fester und variabler Frequenz um. Durch die Umschaltung auf ein alternatives Spannungsnetz wird die Funktion des Kreiselpumpenaggregats auch bei Ausfall eines Spannungsnetzes gewährleistet.

Als vorteilhaft hat es sich erwiesen, den Anschluss der Schaltvorrichtung für ein zweites Spannungsnetz mit einem Frequenzumrichter zu verbinden, mit zwei Schaltmitteln zwischen den Spannungsnetzen umzuschalten und den Mikrorechner über das Bussystem mit dem Frequenzumrichter oder einer Regeleinrichtung zu verbinden. Bei Verwendung von einem Schaltmittel, welches auch nach Art eines Wechselschalters wirken kann, ist nur ein unmittelbares Schalten möglich. Mit zwei Schaltmitteln kann der zeitliche Verlauf des Schaltvorganges individuell über den Mikrorechner an die jeweilige Situation angepasst werden. Eine Zu- oder Abschaltanforderung für ein Kreiselpumpenaggregat oder auch eine Umschaltanforderung zwischen verschiedenen Spannungsnetzen ist über das Bussystem von einem Frequenzumrichter oder einer Regeleinrichtung an die Schaltvorrichtung des Kreiselpumpenaggregates übertragbar.

Ein Vorteil ergibt sich dadurch, dass bei einem Ausfall des Frequenzumrichters oder auch bei einem Fehler in der Busverbindung der Mikrorechner das Kreiselpumpenaggregat auf ein Spannungsnetz fester Frequenz schalten kann. Ein solcher, den Frequenzumrichter umgehender Betriebszustand, wird auch als Bypassbetrieb bezeichnet.

Eine alternative Ausgestaltung sieht vor, dass an den Antriebsmotoranschluss der Frequenzumrichter angeschlossen ist und dass der Antriebsmotor und ein weiterer Antriebsmotor an den Anschlüssen für ein erstes und zweites Spannungsnetz angeschlossen sind. An eine Schaltvorrichtung sind dadurch zwei Antriebsmotoren anschließbar. Die Antriebsmotoren können dabei je nach Anlagenerfordernissen individuell mit der Frequenzumrichterspannung verbunden werden.

Nach einer anderen Ausgestaltung besitzt die Schaltvorrichtung Mittel zur Erfassung und/oder Speicherung von Motorstrom-, Motorspannungs- und/oder von Leistungsfaktorwerten. Durch eine solche Aufzeichnung von Leistungsdaten ist eine zusätzliche Motorüberwachung möglich.

Es ist weiterhin vorgesehen, dass die Schaltvorrichtung Mittel für Überwachungs- und/oder Diagnosefunktionen aufweist. So können verschiedene pumpen- und/oder antriebsrelevante Größen erfasst, ermittelt und überwacht werden. Darüber hinaus kann die Schaltvorrichtung Bedien-/Eingabemittel und/oder Anzeige-/Ausgabemittel aufweisen. Als Beispiele für Bedien-/Eingabemittel seien Eingabetasten, Dip-Switches, Signaleingänge, als Beispiele für Anzeige-/Ausgabemittel Display, mehrfarbige LED's, Signal- und Relaisausgänge genannt.

In einer Mehrpumpenanordnung verbindet das Bussystem in vorteilhafter Weise die Schaltvorrichtungen von jedem Antriebsmotor, wodurch die Mikrorechner untereinander in Wirkverbindung stehen. Vorzugsweise ist eine der Schaltvorrichtungen als eine vorrangige Schaltvorrichtung ausgebildet. Die Kreiselpumpenaggregate können dadurch in flexibler Weise zu einer Mehrpumpenanlage angeordnet werden, wie beispielweise zu einer Druckerhöhungsanlage, in der die Pumpen - gesteuert durch die vorrangige Schaltvorrichtung - bedarfsweise zu- oder abgeschaltet werden.

Die Schaltvorrichtungen sind mit Mitteln zum Durchleiten ein oder mehrerer Spannungen versehen. So kann in einer Mehrpumpenanlage eine Spannung wie eine Spannung eines Spannungsnetzes fester oder variabler Frequenz von Schaltvorrichtung zu Schaltvorrichtung durchgeschleift werden. Weitere Ausgestaltungen sehen vor, dass die Schaltvorrichtungen mit starren oder schaltbaren Mitteln zum Durchleiten einer Frequenzumrichterspannung versehen sind und/oder dass ein Schaltmittel den Stromfluss der Frequenzumrichterspannung zu einem Antriebsmotor zu- oder abschaltet. Dies ermöglicht den Aufbau einer Mehrpumpenanordnung mit temporärer Zuordnung der Frequenzumrichterspannung zu einzelnen Antriebsmotoren, die dadurch drehzahlgeregelt zu- oder abgeschaltet werden, bei gleichzeitig kurzen Anschlussleitungslängen.

Gemäß einer Ausgestaltung ermittelt eine Synchronisationseinheit zwischen zwei Spannungsnetzen mit fester und/oder variabler Frequenz die jeweiligen Phasenlagen und Frequenzen und bei einer Gleichheit von Phasenlagen und Frequenzen fließt ein Synchronisationssignal an einen Mikrorechner und schaltet ein Kreiselpumpenaggregat um. Dadurch kann eine Umschaltung von einem Spannungsnetz auf ein anderes Spannungsnetz erfolgen, wobei die Bildung von unerwünschten Druckstößen oder Pulsationen im Rohrleitungssystem vermieden wird.

Zur weiteren Reduzierung des Installationsaufwandes ist bei einer Mehrpumpenanordnung zwischen Frequenzumrichter und einer ersten Schaltvorrichtung eine Festfrequenz-Verteilereinheit mit Mitteln zum Durchleiten einer Frequenzumrichterspannung angeordnet. Eine solche Festfrequenz-Verteilereinheit ist beispielweise mit ein oder mehreren Ein- und Ausgängen für ein Spannungsnetz fester Frequenz, einen Ein- und Ausgang für ein Spannungsnetz variabler Frequenz und ein oder mehreren Ausgängen für Schalt- oder Messsignale ausgestattet. Die Mittel zur Durchleitung der Frequenzumrichterspannung können mit Drosselelementen versehen sein, die zur Glättung des Frequenzumrichterstromes führen. Eine Synchronisationseinheit kann in der Schaltvorrichtung oder in der Festfrequenz-Verteilereinheit angeordnet sein. Bei Anordnung in der Festfrequenz-Verteilereinheit dient eine Synchronisationseinheit in effektiver Weise zur synchronisierten Spannungsnetzumschaltung für alle Kreiselpumpenaggregate.

Weiterhin kann eine Schaltvorrichtung Mittel zur Steuerung eines Frequenzumrichters aufweisen. Damit kann eine vorrangige Schaltvorrichtung Start, Stopp und/oder die Frequenz eines Frequenzumrichters steuern.

Ein vorteilhaftes Verfahren zum Betrieb eines erfindungsgemäßen Kreiselpumpenaggregates sieht vor, dass der Mikrorechner einer Schaltvorrichtung ein oder mehrere Eingangssignale auswertet und die Zu- oder Abschaltung des Kreiselpumpenaggregates steuert. Dies erlaubt den von einer übergeordneten Steuerung unabhängigen Betrieb eines Kreiselpumpenaggregates. Der Mikrorechner kann auch den Wechsel von einem mit dem Antriebsmotor verbundenen Spannungsnetz auf ein anderes Spannungsnetz steuern.

Außerdem wird vorgeschlagen, dass der Mikrorechner mit Signalen eines Frequenzumrichters den Betrieb von einem oder mehreren Kreiselpumpenaggregaten steuert. Alternativ ist vorgeschlagen, dass der Mikrorechner einen Frequenzumrichter steuert.

Es ist weiterhin vorgesehen, dass die Schaltvorrichtung pumpen- und/oder antriebsrelevante Überwachungs- und/oder Diagnosefunktionen bereitstellt. Der Mikrorechner ist dazu in der Lage, Messwerte zu erfassen, zu verarbeiten und zu speichern.

Bei Anwendungen, für die eine Leistungsüberwachung der Antriebsmotoren erforderlich ist, hat sich ein Verfahren bewährt, wonach der Mikrorechner eine Leistungsaufzeichnung und -überwachung durchführt. Dies erfolgt durch Auswertung der in den Schaltvorrichtungen fließenden Ströme und Spannungen des Motors.

Als Basis für eine Überwachung und/oder eine Diagnose eines Kreiselpumpenaggregates sind Histogramme mit über die Laufzeit eines Kreiselpumpenaggregates kumulierten Leistungs- und/oder Durchflusswerten vorgesehen. Durch die Erfindung sind so relevante Daten eines Kreiselpumpenaggregates jederzeit und direkt an einem Kreiselpumpenaggregat verfügbar.

Für den Betrieb einer erfindungsgemäßen Mehrpumpenanordnung kann der Mikrorechner einer Schaltvorrichtung die Zu- und Abschaltung von weiteren Kreiselpumpenaggregaten steuern und über das Bussystem deren Zu- oder Abschaltung anfordern. Dies ermöglicht beispielsweise den Aufbau kostengünstiger Druckerhöhungsanlagen ohne übergeordnete Steuerung.

Bei temporärer Zuordnung einer Frequenzumrichterspannung zu einzelnen Antriebsmotoren einer Mehrpumpenanordnung ist es von Vorteil, dass ein Frequenzumrichter mit Regeleinrichtung über das Bussystem die Schaltvorrichtungen der einzelnen Kreiselpumpenaggregate überwacht und in Abhängigkeit von Anlagenbedingungen die Zu- und Abschaltung einzelner Kreiselpumpenaggregate von deren Schaltvorrichtung anfordert.

Es ist ebenfalls vorgesehen, dass der Mikrorechner einer Schaltvorrichtung den Frequenzumrichter steuert. Neben Start- und Stoppsignal kann so beispielsweise eine Vorgabe von dessen Frequenz erfolgen.

Vorzugsweise schaltet der Mikrorechner mit einem Synchronisationssignal den Antriebsmotor zwischen verschiedenen Spannungsnetzen bei gleichen Phasenlagen und Frequenzen der Spannungsnetze um. Umschaltbedingte Spannungsdifferenzen, Stromspitzen und daraus resultierende Druckstöße im Rohrleitungssystem werden dadurch verhindert. Eine Umschaltung des Antriebsmotors auf ein anderes Spannungsnetz kann derartig erfolgen, dass in der Schaltvorrichtung das verbundene Spannungsnetz erst nach erfolgter Zuschaltung des anderen Spannungsnetzes abgetrennt wird.

Ausführungsbeispiele der Erfindung sind in den Zeichnungen dargestellt und werden im Folgenden näher beschrieben. Es zeigen die
- Fig. 1: ein Kreiselpumpenaggregat mit Schaltvorrichtung,
- Fig. 2: den schaltungstechnischen Aufbau einer Schaltvorrichtung,
- Fig. 3: mehrere Kreiselpumpenaggregate in einer Mehrpumpenanordnung zum Betrieb an einem Spannungsnetz fester Frequenz,
- Fig. 4: eine Mehrpumpenanordnung mit einem Frequenzumrichter und zum Betrieb an Spannungsnetzen fester und variabler Frequenz,
- Fig. 5: eine alternative Verwendung einer Schaltvorrichtung in einer Zweipumpenanordnung zum Betrieb an einem Spannungsnetz variabler Frequenz ,
- Fig. 6: eine Mehrpumpenanordnung mit vier Kreiselpumpen und zwei Schaltvorrichtungen und zum Betrieb an einem Spannungsnetz variabler Frequenz und
- Fig. 7: eine alternative Verwendung einer Schaltvorrichtung zum Betrieb an einem Spannungsnetz fester Frequenz und mit Stem-Dreieck-Anlauf.

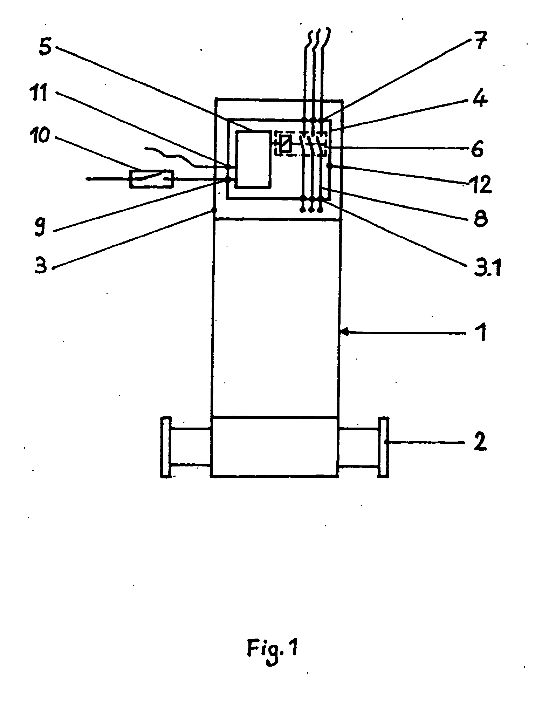

Die Fig. 1 zeigt ein Kreiselpumpenaggregat 1, bestehend aus Pumpe 2, Antriebsmotor 3 mit einer Schaltvorrichtung 4. Die Pumpe 2 ist hier als Bauart in Form einer mehrstufigen Inlinepumpe dargestellt, wobei die Pumpenstufen oberhalb der Rohrleitungsanschlüsse angeordnet sind. Die Schaltvorrichtung ist am Antriebsmotor 3 angebaut, kann aber ebenso gut in diesem integriert sein. In der Schaltvorrichtung 4 sind ein Mikrorechner 5 und ein Schaltmittel 6 integriert. Das Schaltmittel 6 kann ein mechanisches Schütz oder vorzugsweise ein Halbleiterschütz sein. Es sind aber auch andere in Motorabzweigen verwendete Komponenten und deren Kombinationen möglich, so auch Anordnungen mit Motorschutzschaltern, Überlastrelais und/oder Schützkombinationen für Stern-Dreieck-Anlauf oder Softstartern. Die Schaltvorrichtung 4 weist einen Anschluss 7 zur Verbindung mit einem - hier dreiphasigen - Spannungsnetz auf. Leitungen 8 führen das Spannungsnetz innerhalb der Schaltvorrichtung 4 über das Schaltmittel 6 und einen Antriebsmotoranschluss 3.1 zum Antriebsmotor 3. An einem Signaleingang 9 ist in diesem Ausführungsbeispiel ein Druckschalter 10 angeschlossen, der eine Über- oder Unterschreitung eines bestimmten Druckwertes in einer - hier nicht dargestellten - Anlage und an dessen Einbaustelle erfasst. Der Mikrorechner 5 wertet das Schaltsignal oder auch ein anderes, kontinuierliches Eingangssignal aus.

Der Signaleingang 9 eignet sich sowohl für ein Schaltsignal als auch für ein kontinuierliches Eingangssignal. Dies ist durch eine entsprechende Eingangsbeschaltung innerhalb der Schaltvorrichtung 4 realisiert. Die Eingangsbelegung ist durch ein Bedienmittel parametrierbar und/oder per Dip-Switches auswählbar gestaltet. Die Schaltvorrichtung kann auch mehrere Signaleingänge und/oder zusätzliche Signalausgänge besitzen.

Weiterhin sind an der Schaltvorrichtung 4 Anschlüsse 11, 12 für ein serielles Bussystem vorgesehen. Der Mikrorechner 5 ist mit dem Signaleingang 9 und dem Anschluss 11 für ein serielles Bussystem verbunden. Eine Schaltanforderung, die über den Signaleingang 9 und/oder über das serielle Bussystem an die Schaltvorrichtung 4 des Kreiselpumpenaggregates 1 gegeben wird, wird so durch den Mikrorechner 5 verarbeitet. Bei einem - wie dargestellt - am Signaleingang 9 der Schaltvorrichtung 4 angeschlossenen Druckschalter 10, der ein Schaltsignal bei Unter- oder Überschreiten eines bestimmten Druckwertes an dessen Einbauort liefert, steuert der Mikrorechner 5 das Schaltmittel 6 an, das den Antriebsmotor 3 des Kreiselpumpenaggregates 1 mit dem angeschlossenen Spannungsnetz verbindet oder von diesem trennt.

In dem gezeigten Ausführungsbeispiel ist die Schaltvorrichtung an den Antriebsmotor angebaut und das Schaltmittel ist in die Schaltvorrichtung integriert. Nach der Erfindung ist ebenfalls die Verwendung eines externen Schaltmittels und/oder eine antriebsmotorunabhängige Anordnung der Schaltvorrichtung, wie eine Wand- oder eine Schaltschrankanordnung, vorgesehen. Auch ein Frequenzumrichter kann als Schaltmittel genutzt werden.

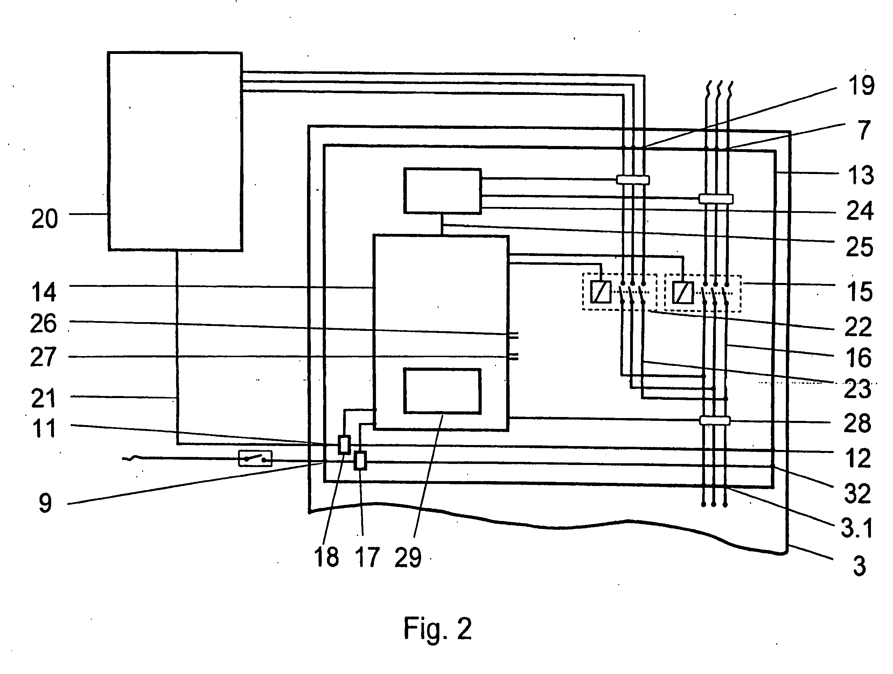

Fig. 2 zeigt den schaltungstechnischen Aufbau einer Schaltvorrichtung 13 eines Kreiselpumpenaggregates mit einem Mikrorechner 14 und einem Schaltmittel 15 zur Verbindung eines Antriebsmotors 3 mit einem an die Schaltvorrichtung 13 über einen Anschluss 7 angeschlossenen - hier dreiphasigen - Spannungsnetz, das über Leitungen 16 zu einem Antriebsmotor geführt ist. Die Schaltvorrichtung 13 weist außerdem, wie die Schaltvorrichtung von Fig. 1, einen Signaleingang 9 und Anschlüsse 11, 12 für ein serielles Bussystem 21 sowie Mittel 17, 18 zum Durchleiten von Signalen auf. Sie besitzt zusätzlich einen Anschluss 19 für ein zweites Spannungsnetz, welches als ein Spannungsnetz eines Frequenzumrichters 20 mit der Schaltvorrichtung 13 verbunden ist. Die Schaltvorrichtung 13 ist über das serielle Bussystem 21 mit dem Frequenzumrichter 20 verbunden. Ein zusätzliches Schaltmittel 22 führt das Spannungsnetz des Frequenzumrichters 20 über Leitungen 23 zum Antriebsmotor 3, wodurch das Kreiselpumpenaggregat mit einem zweiten Spannungsnetz verbindbar ist. An das Kreiselpumpenaggregat sind ein Spannungsnetz fester und ein Spannungsnetz variabler Frequenz angeschlossen. Alternativ ist der zusätzliche Anschluss des Kreiselpumpenaggregates an ein Spannungsnetz einer Netzersatzanlage möglich. Der Mikrorechner 14 kann mit Signalen des Frequenzumrichters 20 die Schaltstellungen der Schaltmittel 15 und 22 und somit den Betrieb des Kreiselpumpenaggregates steuern. Für eine stoßfreie Umschaltung von einem Spannungsnetz auf ein anderes ermittelt eine Synchronisationseinheit 24 die jeweiligen Phasenlagen und Frequenzen der beiden Spannungsnetze. Bei einer Gleichheit von Phasenlagen und Frequenzen wird über eine Signalleitung 25 ein Synchronisationssignal an den Mikrorechner 14 übertragen und der Mikrorechner schaltet den Antriebsmotor 3 auf ein anderes Spannungsnetz um, vorzugsweise derart, dass in der Schaltvorrichtung das mit dem Antriebsmotor verbundene Spannungsnetz erst nach erfolgter Zuschaltung des anderen Spannungsnetzes abgetrennt wird. Statt der beiden getrennt schaltbaren Schaltmittel 15 und 22 ist auch ein Schaltmittel nach Art eines Wechselschalters einsetzbar, das zwischen beiden Spannungsnetzen umschaltet.

Mit einem Betriebsartschalter 26 ist der Mikrorechner 14 zwischen einem Betrieb des Kreiselpumpenaggregates mit möglichem Spannungsnetzwechsel oder einem Betrieb mit nur einem Spannungsnetz umschaltbar. Für den Fall einer externen Störung ist der Mikrorechner 14 mit einem Betriebsartschalter 27 auch zwischen automatischem oder extern schaltbarem Pumpenbetrieb umschaltbar. Ebenso ist die Wahl der Betriebsweise auch durch entsprechende Programmparameter im Mikrorechner 14 einstellbar. Bei einem automatischen Betrieb wird im Falle eines Fehlers des Frequenzumrichters 20 oder des seriellen Bussystems 21 durch den Mikrorechner 14 beispielsweise automatisch auf das Spannungsnetz fester Frequenz gewechselt. Dies ist bei Anwendungen von Vorteil, bei denen immer eine Förderwirkung der Pumpe gewährleistet sein muss. Alternativ dazu ist vorgesehen, dass der Antriebsmotor von beiden Spannungsnetzen getrennt wird. Bei gewählter Betriebsweise mit extern schaltbarem Pumpenbetrieb kann an die Schaltvorrichtung 13 über den Signaleingang 9 ein Schaltsignal angeschlossen sein, welches das Kreiselpumpenaggregat im Fehlerfall ein- und auszuschalten vermag. Zusätzlich sind in der Schaltvorrichtung 13 Mittel 28 zur Erfassung von Motorstrom-, Motorspannungs- und/oder Leistungsfaktorwerten zwischen Motorstrom und -spannung vorhanden. Diese Leistungsdaten werden in einem Speicher 29 des Mikrorechners gespeichert und dienen einer zusätzlichen Motorüberwachung.

Die Mittel 28 zur Erfassung von Motorstrom-, Motorspannungs- und/oder von Leistungsfaktorwerten und die Synchronisationseinheit 24 können in einer baulichen Einheit integriert sein. Diese kann alternativ auch in einer Einheit außerhalb der Schaltvorrichtung angeordnet sein, mit der die Schaltvorrichtung - beispielsweise mittels einem Bussystem - in Kommunikationsverbindung steht. Somit ist eine Einheit vorhanden, die sämtliche motorrelevanten Größen wie Motorstrom, Motorspannung, Leistung, Leistungsfaktor, Phasenverfügbarkeit, Drehrichtung des Motors sowie Phasensynchronität ermittelt. Eine Schaltvorrichtung kann bei Bedarf mit einer solchen Einheit ausgerüstet oder verbunden werden. Es kann sich bei der baulichen Einheit auch um einen Frequenzumrichter handeln.

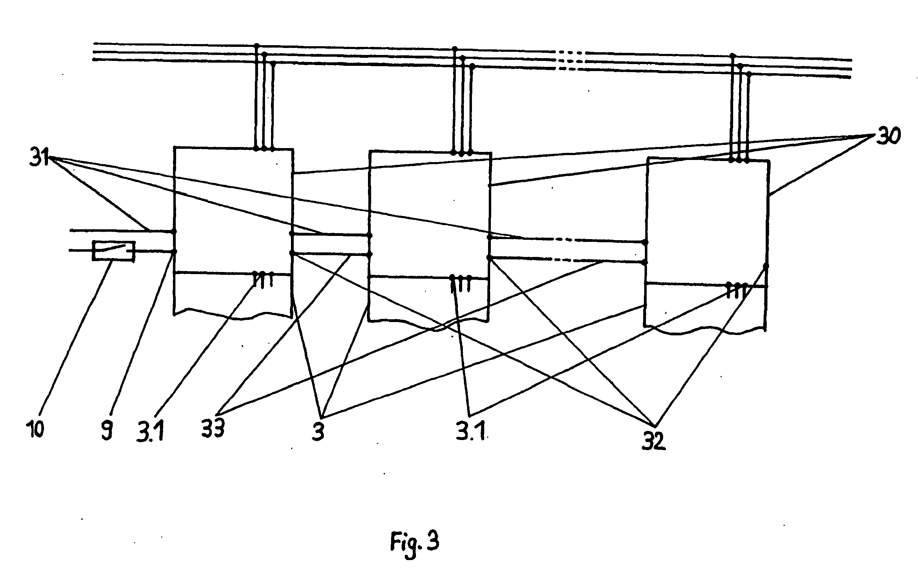

Fig. 3 zeigt Teile von einer Mehrpumpenanordnung. Deren Antriebsmotoren 3 sind mit je einer Schaltvorrichtung 30 versehen und die Schaltvorrichtungen 30 sind untereinander über ein Bussystem 31 miteinander verbunden. Zu diesem Zweck sind in den Schaltvorrichtungen 30 gemäß Fig. 2 Mittel 18 zum Durchleiten von Bussignalen vorhanden. An den Signaleingang 9 der ersten der Schaltvorrichtungen 23 ist ein Druckschalter 10 angeschlossen. Das Eingangssignal des Druckschalters 10 wird über Mittel 17 gemäß Fig. 2, Signalausgänge 32 und über Leitungen 33 an die gleichgearteten Schaltvorrichtungen 30 weitergeleitet. Damit ist beispielsweise eine Kaskadensteuerung realisierbar, in der abhängig vom Anlagendruck und von parametrierbaren Einschaltverzögerungszeiten eine entsprechende Anzahl an Kreiselpumpenaggregaten zugeschaltet wird. Jede der Schaltvorrichtungen 30 kann als eine vorrangige Schaltvorrichtung ausgebildet sein. Der Mikrorechner 14 dieser vorrangigen Schaltvorrichtung wertet das Eingangssignal des Druckschalters 10 aus und steuert die Zu- oder Abschaltung von weiteren Kreiselpumpenaggregaten, indem er über das Bussystem 31 deren Zu- oder Abschaltung bedarfsweise anfordert. Die gezeigte Anordnung ist beispielsweise als kostengünstige Druckerhöhungsanlage einsetzbar, Ist vorgesehen, dass immer dieselbe Schaltvorrichtung als vorrangige Schaltvorrichtung ausgebildet ist, kann auf eine Weiterleitung des Eingangssignals des Druckschalters 10 und damit auf die Leitungen 33 verzichtet werden.

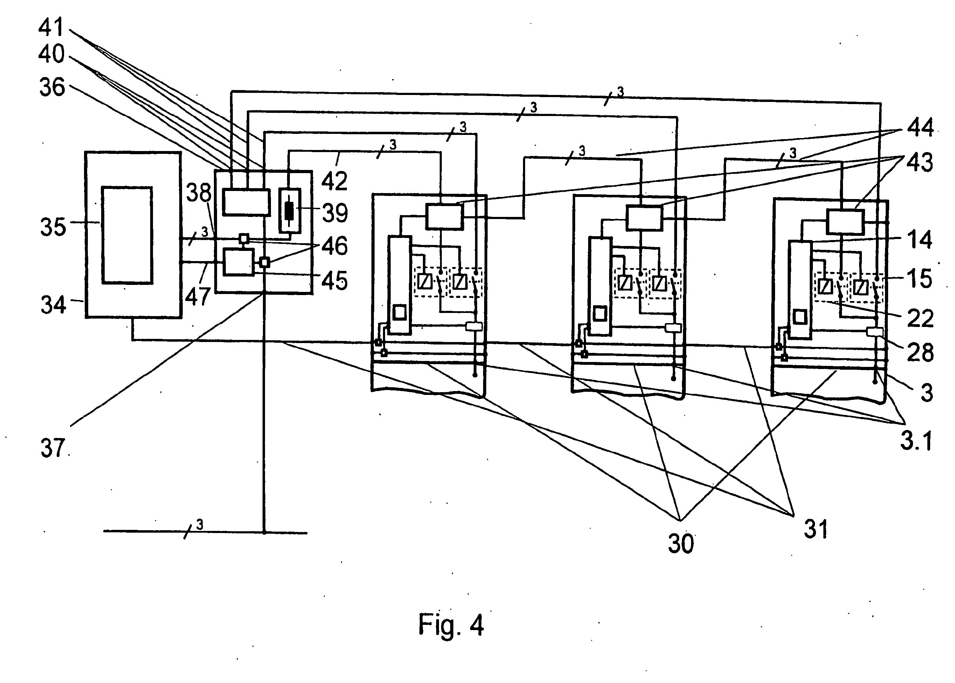

Fig. 4 zeigt einen Aufbau einer anderen Mehrpumpenanordnung mit Frequenzumrichterbetrieb. Aus Gründen der Übersichtlichkeit und im Gegensatz zu den Darstellungen der Fig. 1 bis 3 sind hier die dreiphasigen Leitungen gebündelt dargestellt und mit der Markierung /³ gekennzeichnet. Die Schaltvorrichtungen 30 sind über das serielle Bussystem 31 miteinander und mit einem Frequenzumrichter 34 mit Regeleinrichtung 35 verbunden.

Zwischen Frequenzumrichter 34 und einer ersten der Schaltvorrichtungen 30 ist eine Festfrequenz-Verteilereinheit 36 angeordnet, die über einen Anschluss 37 an ein Spannungsnetz fester Frequenz angeschlossen ist Der Anschluss 37 ist ausgelegt für eine Anschlussleistung, die der Summe der angeschlossenen Motorleistungen sicher entspricht. Die Festfrequenz-Verteilereinheit kann auch mehrere Anschlüsse für unterschiedliche Leitungsquerschnitte aufweisen. Über einen weiteren Anschluss 38 ist die Festfrequenz-Verteilereinheit 36 mit dem Spannungsnetz variabler Frequenz des Frequenzumrichters 34 verbunden. Die Festfrequenz-Verteilereinheit 36 besitzt Mittel zum Durchleiten einer dreiphasigen Frequenzumrichterspannung, die mit Drosselelementen 39 zur Glättung des Frequenzumrichterstromes versehen sind. Des Weiteren sind an der Festfrequenz-Verteilereinheit 36 mehrere Ausgänge 40 für das Spannungsnetz fester Frequenz vorhanden. Über daran anschließbare Leitungen 41 ist das Spannungsnetz fester Frequenz auch mehreren Schaltvorrichtungen 30 zuführbar. Die Menge der anschließbaren Schaltvorrichtungen 30 ist abhängig von der Anzahl der Ausgänge 40.

Die Frequenzumrichterspannung wird einer ersten der Schaltvorrichtungen 30 über eine Leitung 42 zugeführt. Die Schaltvorrichtungen 30 weisen Mittel 43 zum Durchleiten der Frequenzumrichterspannung auf, welche über Leitungen 44 von einer Schaltvorrichtung zur nächsten weitergeleitet wird. In der Festfrequenz-Verteilereinheit 36 ist, alternativ zur Schaltvorrichtung gemäß Fig. 2, eine Synchronisationseinheit 45 angeordnet. Sie ist mit dem Spannungsnetz fester Frequenz und dem Spannungsnetz des Frequenzumrichters über Messwandler 46 und über eine Signalleitung 47 mit dem Frequenzumrichter 34 verbunden.

Diese Mehrpumpenanordnung ermöglicht in einer Druckerhöhungsanlage die temporäre Zuordnung eines Frequenzumrichters zu einzelnen Kreiselpumpenaggregaten. In einer solchen Druckerhöhungsanlage mit einem sogenannten fliegenden Frequenzumrichter werden zur Aufrechterhaltung eines bestimmten Druckes bedarfsabhängig Kreiselpumpen druckstoßfrei zu- und abgeschaltet. Dazu wird jeweils eine zu- oder abzuschaltende Pumpe drehzahlgeregelt betrieben. Der Frequenzumrichter 34 überwacht mit seiner Regeleinrichtung 35 über das Bussystem 31 alle Schaltvorrichtungen 30 der einzelnen Kreiselpumpenaggregate. In Abhängigkeit von den Anlagenbedingungen fordert der Frequenzumrichter 34 die Zu- oder Abschaltung einzelner Kreiselpumpenaggregate von deren Schaltvorrichtung 30 an, welche ihre Antriebsmotoren 3 mit der Frequenzumrichterspannung verbinden. Ein Mikrorechner 14 einer jeweiligen Schaltvorrichtung 30 steuert die erforderlichen Schalthandlungen. Für eine stoßfreie Umschaltung von einem Spannungsnetz auf ein anderes Spannungsnetz ermittelt die Synchronisationseinheit 45 die jeweiligen Phasenlagen und Frequenzen der beiden Spannungsnetze. Bei einer Gleichheit von Phasenlagen und Frequenzen wird über die Signalleitung 47 ein Synchronisationssignal an den Frequenzumrichter 34 und dessen Regeleinrichtung 35 übertragen, der daraufhin seine Frequenz beibehält und über das serielle Bussystem 31 eine Umschaltung bei der entsprechenden Schaltvorrichtung anfordert. Die Umschaltung eines Antriebsmotors auf ein anderes Spannungsnetz wird vom Mikrorechner 14 dieser Schaltvorrichtung 30 gesteuert, vorzugsweise derart, dass in der Schaltvorrichtung das mit dem Antriebsmotor verbundene Spannungsnetz erst nach erfolgter Zuschaltung des anderen Spannungsnetzes abgetrennt wird.

Im Ausführungsbeispiel wird das Synchronisationssignal durch eine Synchronisationseinheit 45 in der Festfrequenz-Verteilereinheit 36 erzeugt. Falls die Festfrequenz-Verteilereinheit Messsignale der Phasenspannungen an den Frequenzumrichter 34 liefert, kann eine Synchronisationsermittlung auch in der Regeleinrichtung 35 des Frequenzumrichters 34 erfolgen. Ebenso kann gemäß Fig. 2 in den Schaltvorrichtungen jeweils eine Synchronisationseinheit 24 angeordnet sein. Eine solche Ausführungsvariante eignet sich insbesondere dann, wenn sichergestellt sein muss, dass auch bei einem fehlerhaften Anschluss von Verbindungsleitungen der Antriebsmotor bei einer Umschaltung auf ein anderes Spannungsnetz seine Drehrichtung beibehält.

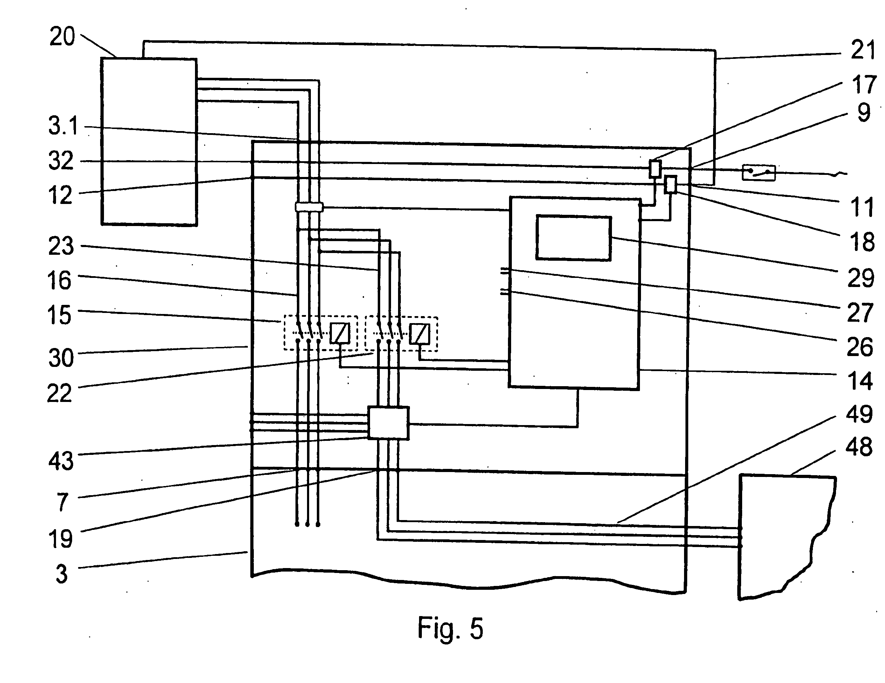

Fig. 5 zeigt eine umgekehrte Wirkungsweise der Schaltvorrichtung 30 und deren Anordnung bei einer Zweipumpenanordnung. Zum besseren Verständnis und im Gegensatz zu den Fig. 3 und 4 ist sie um 180° gedreht dargestellt. Abweichend zur Fig. 4 ist aber an den Antriebsmotoranschluss 3.1 der Frequenzumrichter 20 angeschlossen und der Anschluss 7 für ein erstes Spannungsnetz wird hier zum Verbinden der Schaltvorrichtung 30 mit dem Antriebsmotor 3 verwendet. Und ein weiterer Antriebsmotor 48 eines Kreiselpumpenaggregates ohne Schaltvorrichtung ist über Leitungen 49 an dem Anschluss 19 für ein zweites Spannungsnetz angeschlossen. Durch die Vertauschung der Anschlussverwendung an der Schaltvorrichtung 30 kann die Frequenzumrichterspannung auf einen der beiden oder auf beide Antriebsmotoren 3, 48 geschaltet werden. Dies eröffnet die nachträgliche Möglichkeit zur einfachen Ansteuerung von vorhandenen Pumpen mit einer Frequenzumrichterspannung.

Zur Erweiterung der Anordnung um zusätzliche Kreiselpumpenaggregate weist die Schaltvorrichtung 30 schaltbare Mittel 43 zum Durchleiten einer Frequenzumrichterspannung auf. Die Frequenzumrichterspannung kann so auf den an Anschluss 19 angeschlossenen Antriebsmotor 48 geschaltet werden und/oder zu einer nächsten, gleichgearteten Schaltvorrichtung 30 weitergeleitet werden.

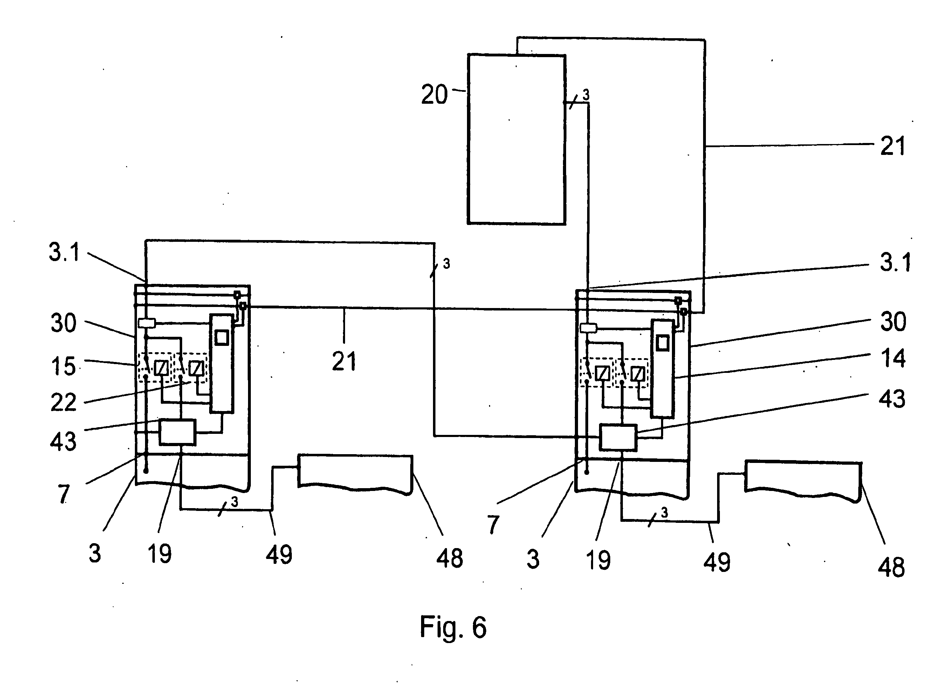

Fig. 6 zeigt eine Verdopplung der Pumpenanordnung von Fig. 5. Hierbei sind Schaltvorrichtungen 30 von Antriebsmotoren 3 über einen Datenbus 21 untereinander und mit einem Frequenzumrichter 20 verbunden. Die Schaltvorrichtungen 30 weisen schaltbare Mittel 43 zum Durchleiten einer Frequenzumrichterspannung auf. Über Anschlüsse 19 sind Antriebsmotoren 48 angeschlossen. Durch diese Anordnung können je nach Anlagenerfordernissen einzelne, mehrere oder alle der Antriebsmotoren 3, 48 mit der Frequenzumrichterspannung verbunden werden.

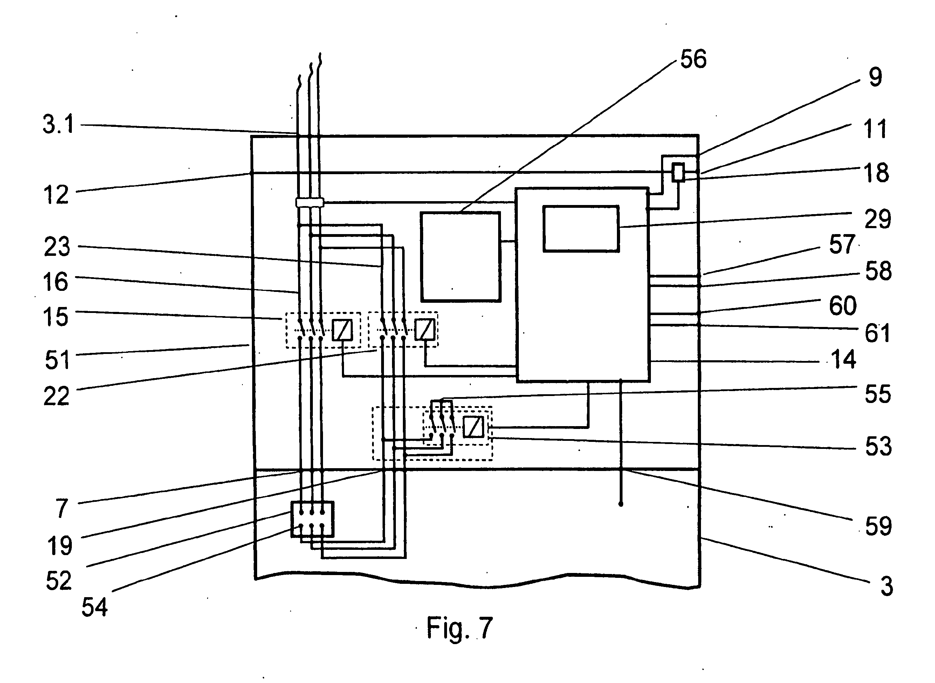

Fig. 7 zeigt eine alternative Verwendung einer Schaltvorrichtung gemäß Fig. 5 zum Betrieb an einem Spannungsnetz fester Frequenz. Über die Ausgänge 7 und 19 einer Schaltvorrichtung 51 ist ein Antriebsmotor 3 über dessen Klemmbrett 52 angeschlossen. Durch die gezeigte Verschaltung ist die Schaltvorrichtung 51 in der Lage, bei dem angeschlossenen Antriebsmotor 3 einen Stern-Dreieck-Anlauf zu realisieren. Dazu sind die Mittel 43 gemäß Fig. 5 derart modifiziert, dass ein Schaltmittel 53 in geschlossenem Zustand eine Verbindung der Motorklemmen 54 zu einem Sternpunkt 55 herstellt. Im normalen Betrieb ist das Schaltmittel 22 geschlossen und die Wicklungen des Antriebsmotors 3 sind im Dreieck verschaltet. Im Anlaufbetrieb wird das Schaltmittel 22 geöffnet und das Schaltmittel 53 geschlossen, so dass die Wicklungen des Antriebsmotors 3 im Stern verschaltet sind. Damit werden Einschaltströme des Antriebsmotors 3 reduziert. Die Schaltvorrichtung 51 ist auch zur Verwendung in einer Mehrpumpenanordnung geeignet und kann als vorrangige Schaltvorrichtung andere Schaltvorrichtungen steuern. Weiterhin besitzt die Schaltvorrichtung 51 eine Anzeige- und Bedieneinheit 56, die mit dem Mikrorechner 14 verbunden ist. Die Anzeige- und Bedieneinheit 56 dient unter anderem einer Parametrierung eines in der Speichereinrichtung 29 des Mikrorechners 14 abgespeicherten Programms. Des Weiteren ist eine Auswahl von voreingestellten Parameterkonfigurationen möglich, die ein schnelles applikationsspezifisches Inbetriebnehmen der Schaltvorrichtung 51 sicherstellt. Die Anzeige- und Bedieneinheit 56 zeigt mittels einem Display und mehreren mehrfarbigen LED, die aus Gründen der Übersichtlichkeit nicht dargestellt sind, sämtliche pumpen- und antriebsrelevanten Daten sowie Warnungs- und/oder Alarmmeldungen eines oder mehrerer Kreiselpumpenaggregate an. Die Schaltvorrichtung 51 besitzt weitere Eingänge 57, 58, 59 und Ausgänge 60, 61. Die Eingänge sind vorgesehen zum Anschließen von weiteren Sensoren, wie beispielsweise Drucksensoren oder PTC-Fühlern zur Motortemperaturüberwachung, oder dienen als Steuereingang. Die Ausgänge 60, 61 können beispielsweise zur Weiterleitung von Warnungs-, Alarmmeldungen oder zur Steuerung eines Frequenzumrichters verwendet werden.

## Patentansprüche

1. Kreiselpumpenaggregat, bestehend aus Pumpe und Antriebsmotor, mit einer Schaltvorrichtung, wobei die Schaltvorrichtung mit einem Anschluss für ein erstes, festfrequentes Spannungsnetz versehen ist und mit einem durch einen Mikrorechner gesteuerten Schaltmittel den Antriebsmotor an dem ersten Spannungsnetz drehzahlfest betreibt, indem das Schaltmittel während des drehzahlfesten Betriebs den Antriebsmotor mit dem Anschluss für das erste Spannungsnetz verbindet , wobei der Mikrorechner (5, 14) in die Schaltvorrichtung (4, 13, 30, 51) integriert ist, wobei die Schaltvorrichtung (4, 13, 30, 51) mit mindestens einem Signaleingang (9) und Anschlüssen (11, 12) für mindestens ein serielles Bussystem (21, 31) versehen ist, wobei der Mikrorechner (5, 14) mit dem Signaleingang (9) und den Anschlüssen (11, 12) des Bussystems verbunden ist und wobei im Antriebsmotor (3) und/oder der Schaltvorrichtung (4, 13, 30, 51) ein Bussignale durchleitendes Mittel (18) mit dem Mikrorechner (5, 14) und mit den Anschlüssen (11, 12) des Bussystems (21, 31) verbunden ist, **dadurch gekennzeichnet, dass** die Schaltvorrichtung (4, 13, 30, 51) mit einem Anschluss für ein zweites, vom ersten Spannungsnetz verschiedenes Spannungsnetz (19) und mit einem zusätzlichen, von dem Mikrorechner (5, 14) gesteuerten Schaltmittel (22) versehen ist, dass das zusätzliche Schaltmittel (22) mit dem Anschluss für das zweite Spannungsnetz (19) verbunden ist und dass die Schaltmittel (6, 15, 22, 53) getrennt schaltbar sind und den Stromfluss für einen an der Schaltvorrichtung (4, 13, 30, 50) angeordneten Antriebsmotoranschluss (3.1) und/oder den Antriebsmotor (3) derart schalten, dass der Antriebsmotoranschluss (3.1) und/oder der Antriebsmotor (3) wahlweise mit dem Anschluss für das erste Spannungsnetz (7) oder mit dem Anschluss für das zweite Spannungsnetz (19) verbindbar oder trennbar ist, wobei ein Mittel (43) zum Durchleiten der Spannung des zweiten Spannungsnetzes den Anschluss für das zweite Spannungsnetz (19) mit dem zusätzlichen Schaltmittel (22) und einem weiteren an der Schaltvorrichtung (4, 13, 30, 50) angeordneten, für eine Weiterleitung der Spannung des zweiten Spannungsnetzes vorgesehenen, Anschluss verbindet.

2. Kreiselpumpenaggregat nach Anspruch 1, **dadurch gekennzeichnet, dass** die Schaltvorrichtung (4, 13, 30, 51) als Bestandteil des Antriebsmotors (3) ausgebildet ist.

3. Kreiselpumpenaggregat nach Anspruch 1 oder 2, **dadurch gekennzeichnet, dass** das zweite Spannungsnetz ein Spannungsnetz variabler Frequenz ist.

4. Kreiselpumpenaggregat nach Anspruch 3, **dadurch gekennzeichnet, dass** die Schaltvorrichtung (4, 13, 30, 51) am Anschluss für das zweite Spannungsnetz (19) mit einem Frequenzumrichter (20, 34) verbindbar ist und dass der Mikrorechner (5, 14) über das Bussystem (21, 31) mit dem Frequenzumrichter (20, 34) oder einer Regeleinrichtung (35) verbindbar ist.

5. Kreiselpumpenaggregat nach einem der Ansprüche 1 bis 4, **dadurch gekennzeichnet, dass** die Schaltvorrichtung (4, 13, 30, 51) Mittel für Überwachungs- und/oder Diagnosefunktionen aufweist.

6. Kreiselpumpenaggregat nach einem der Ansprüche 1 bis 5, **dadurch gekennzeichnet, dass** die Schaltvorrichtung (4, 13, 30, 51) Mittel zur Erfassung (28) und/oder Speicherung (29) von Motorstrom-, Motorspannungs- und/oder von Leistungsfaktorwerten besitzt.

7. Kreiselpumpenaggregat nach einem der Ansprüche 1 bis 6, **dadurch gekennzeichnet, dass** die Schaltvorrichtung eine Synchronisationseinheit (24, 45) aufweist, die zwischen den Spannungsnetzen die jeweiligen Phasenlagen und Frequenzen ermittelt und bei einer Gleichheit von Phasenlagen und Frequenzen ein Synchronisationssignal erzeugt, und dass damit eine Umschaltung zwischen den Spannungsnetzen erfolgt.

8. Mehrpumpenanordnung mit mehreren Kreiselpumpenaggregaten nach einem der Ansprüche 1 bis 7 und einem Frequenzumrichter mit Regeleinrichtung zur Erzeugung einer Frequenzumrichterspannung, **dadurch gekennzeichnet, dass** die Schaltvorrichtungen (4, 13, 30, 51) über das serielle Bussystem (21, 31) miteinander und mit dem Frequenzumrichter (34) verbunden sind, wobei die Schaltvorrichtungen (4, 13, 30, 51) über die Anschlüsse (11, 12) des Bussystems (21, 31) verbunden sind, dass die Schaltvorrichtungen (4, 13, 30, 51) an den Anschlüssen für das erste Spannungsnetz (7) mit einem festfrequenten Spannungsnetz verbunden sind, die Schaltvorrichtungen (4, 13, 30, 51) mittels jeweils zwischen dem Anschluss zur Weiterleitung der Spannung des zweiten Spannungsnetzes einer der Schaltvorrichtungen (4, 13, 30, 51) und dem Anschluss für das zweite Spannungsnetz (19) einer anderen der Schaltvorrichtungen (4, 13, 30, 51) geführten Leitungen (44) verbunden sind, und dass die Frequenzumrichterspannung temporär einzelnen Kreiselpumpenaggregaten (1) zugeordnet wird, wobei jeweils ein Kreiselpumpenaggregat (1) drehzahlgeregelt betrieben wird.

9. Mehrpumpenanordnung nach Anspruch 8, **dadurch gekennzeichnet, dass** eine der Schaltvorrichtungen (4, 13, 30, 51) als eine vorrangige Schaltvorrichtung ausgebildet ist.

10. Mehrpumpenanordnung nach Anspruch 9, **gekennzeichnet durch** eine Festfrequenz-Verteilereinheit (36) mit Mitteln zum Durchleiten der Spannung des zweiten Spannungsnetzes vom Frequenzumrichter (35) zu einer der Schaltvorrichtungen (4, 13, 30, 51).

11. Verfahren zum Betrieb einer Mehrpumpenanordnung nach einem der Ansprüche 8 bis 10, **dadurch gekennzeichnet, dass** der Mikrorechner (5, 14) einer der Schaltvorrichtungen der Mehrpumpenanordnung oder der Frequenzumrichter (35) mit Regeleinrichtung (34), Eingangssignale auswertet und eine Zu-, Ab- oder Umschaltung der Spannungsnetze bei mehreren Kreiselpumpenaggregaten (1) der Mehrpumpenanordnung derart steuert, dass die Frequenzumrichterspannung temporär einzelnen Kreiselpumpenaggregaten (1) zugeordnet wird, wobei jeweils ein Kreiselpumpenaggregat (1) drehzahlgeregeit betrieben wird.

12. Verfahren nach Anspruch 11, **dadurch gekennzeichnet, dass** die Umschaltung zwischen den Spannungsnetzen mittels eines Synchronisationssignals bei gleichen Phasenlagen und Frequenzen der Spannungsnetze erfolgt.

13. Verfahren nach Anspruch 12, **dadurch gekennzeichnet, dass** die Umschaltung zwischen den Spannungsnetzen derart erfolgt, dass das verbundene Spannungsnetz erst nach erfolgter Zuschaltung des anderen Spannungsnetzes abgetrennt wird.

## Claims

1. Centrifugal pump unit, consisting of a pump and drive motor, having a switching apparatus, with the switching apparatus being provided with a connection for a first, fixed-frequency voltage system and operating the drive motor on the first voltage system at a fixed rotation speed by means of a switching means which is controlled by a micro computer, in that the switching means connects the drive motor to the connection for the first voltage system during fixed rotation speed operation, with the micro computer (5, 14) being integrated in the switching apparatus (4, 13, 30, 51), with the switching apparatus (4, 13, 30, 51) being provided with at least one signal input (9) and with connections (11, 12) for at least one serial bus system (21, 31), with the micro computer (5, 14) being connected to the signal input (9) and to the connections (11, 12) of the bus system, and with means (18) which pass on bus signals being connected in the drive motor (3) and/or in the switching apparatus (4, 13, 30, 51) to the micro computer (5, 14) and to the connections (11, 12) of the bus system (21, 31), **characterized in that** the switching apparatus (4, 13, 30, 51) is provided with a connection for a second voltage system (19), which is different from the first voltage system, and with an additional switching means (22), which is controlled by the micro computer (5, 14), **in that** the additional switching means (22) is connected to the connection for the second voltage system (19), and **in that** the switching means (6, 15, 22, 53) can be switched separately and switch the current flow for a drive motor connection (3.1), which is arranged at the switching apparatus (4, 13, 30, 50) and/or the drive motor (3) such that the drive motor connection (3.1) and/or the drive motor (3) can be selectively connected to or disconnected from the connection for the first voltage system (7) or to the connection for the second voltage system (19), with a means (43) for passing on the voltage of the second voltage system connecting the connection for the second voltage system (19) to the additional switching means (22) and to a further connection, which is arranged at the switching apparatus (4, 13, 30, 50) and is provided for passing on the voltage from the second voltage system.

2. Centrifugal pump unit according to Claim 1, **characterized in that** the switching apparatus (4, 13, 30, 51) is in the form of a component of the drive motor (3).

3. Centrifugal pump unit according to Claim 1 or 2, **characterized in that** the second voltage system is a variable-frequency voltage system.

4. Centrifugal pump unit according to Claim 3, **characterized in that** the switching apparatus (4, 13, 30, 51) can be connected to a frequency converter (20, 34) at the connection for the second voltage system (19), and **in that** the micro computer (5, 14) can be connected via the bus system (21, 31) to the frequency converter (20, 34) or to a closed-loop control device (35).

5. Centrifugal pump unit according to one of Claims 1 to 4, **characterized in that** the switching apparatus (4, 13, 30, 51) has means for monitoring and/or diagnosis functions.

6. Centrifugal pump unit according to one of Claims 1 to 5, **characterized in that** the switching apparatus (4, 13, 30, 51) has means for detection (28) and/or storage (29) of motor-current, motor-voltage and/or power-factor values.

7. Centrifugal pump unit according to one of Claims 1 to 6, **characterized in that** the switching apparatus has a synchronization unit (24, 45) which determines the respective phase angles and frequencies between the voltage systems and, if the phase angles and frequencies are the same, produces a synchronization signal, and **in that** switching takes place between the voltage systems in this way.

8. Multi-pump arrangement having a plurality of centrifugal pump units according to one of Claims 1 to 7 and having a frequency converter with a closed-loop control device for production of a frequency converter voltage, **characterized in that** the switching apparatuses (4, 13, 30, 51) are connected to one another and to the frequency converter (34) via the serial bus system (21, 31), with the switching apparatuses (4, 13, 30, 51) being connected via the connections (11, 12) of the bus system (21, 31), **in that** the switching apparatuses (4, 13, 30, 51) are connected to the fixed-frequency voltage system at the connections for the first voltage system (7), the switching apparatuses (4, 13, 30, 51) are connected by means of lines (44) which are in each case routed between the connection for passing on the voltage from the second voltage system of one of the switching apparatuses (4, 13, 30, 51) and the connection for the second voltage system (19) of another of the switching apparatuses (4, 13, 30, 51) and **in that** the frequency converter voltage is temporarily associated with individual centrifugal pump units (1), with one centrifugal pump unit (1) in each case being operated with closed-loop control of the rotation speed.

9. Multi-pump arrangement according to Claim 8, **characterized in that** one of the switching apparatuses (4, 13, 30, 51) is in the form of a master switching apparatus.

10. Multi-pump arrangement according to Claim 9, **characterized by** a fixed-frequency distribution unit (36) having means for passing on the voltage of the second voltage system from the frequency converter (35) to one of the switching apparatuses (4, 13, 30, 51).

11. Method for operation of a multi-pump arrangement according to one of Claims 8 to 10, **characterized in that** the micro computer (5, 14) of one of the switching apparatuses in the multi-pump arrangement or the frequency converter (35) with the closed-loop control device (34) evaluates input signals and controls connection, disconnection or switching of the voltage systems for a plurality of the centrifugal pump units (1) in the multi-pump arrangement such that the frequency converter voltage is temporarily associated with individual centrifugal pump units (1), with one centrifugal pump unit (1) in each case being operated with closed-loop control of the rotation speed.

12. Method according to Claim 11, **characterized in that** the switching between the voltage systems takes place by means of a synchronization signal when the phase angles and frequencies in the voltage systems are the same.

13. Method according to Claim 12, **characterized in that** the switching between the voltage systems takes place such that the voltage system which is connected is disconnected only after the other voltage system has been connected.

## Revendications

1. Groupe à pompe centrifuge, composé d'une pompe et d'un moteur d'entraînement, comprenant un dispositif de commutation, le dispositif de commutation étant muni d'une borne pour un premier réseau électrique à fréquence fixe et faisant fonctionner le moteur d'entraînement sur le premier réseau électrique à une vitesse de rotation fixe avec des moyens de commutation commandés par un microcalculateur en ce que les moyens de commutation, pendant le fonctionnement à une vitesse de rotation fixe, relient le moteur d'entraînement avec la borne pour le premier réseau électrique, le microcalculateur (5, 14) étant intégré dans le dispositif de commutation (4, 13, 30, 51), le dispositif de commutation (4, 13, 30, 51) étant muni d'au moins une entrée de signal (9) et de bornes (11, 12) pour au moins un système de bus série (21, 31), le microcalculateur (5, 14) étant relié avec l'entrée de signal (9) et les bornes (11, 12) du système de bus et dans le moteur d'entraînement (3) et/ou le dispositif de commutation (4, 13, 30, 51), des moyens laissant passer les signaux de bus (18) étant reliés avec le microcalculateur (5, 14) et avec les bornes (11, 12) du système de bus (21, 31), **caractérisé en ce que** le dispositif de commutation (4, 13, 30, 51) est muni d'une borne pour un deuxième réseau électrique (19) différent du premier réseau électrique et de moyens de commutation (22) supplémentaires commandés par le microcalculateur (5, 14), **en ce que** les moyens de commutation (22) supplémentaires sont reliés avec la borne pour le deuxième réseau électrique (19) et **en ce que** les moyens de commutation (6, 15, 22, 53) peuvent être commutés séparément et commutent le flux de courant pour une borne de moteur d'entraînement (3.1) disposée sur le dispositif de commutation (4, 13, 30, 51) et/ou le moteur d'entraînement (3) de telle sorte que la borne de moteur d'entraînement (3.1) et/ou le moteur d'entraînement (3) peuvent, au choix, être connectés ou déconnectés de la borne pour le premier réseau électrique (7) ou de la borne pour le deuxième réseau électrique (19), des moyens (43) pour laisser passer la tension du deuxième réseau électrique reliant la borne pour le deuxième réseau électrique (19) avec les moyens de commutation (22) supplémentaires et une borne supplémentaire disposée sur le dispositif de commutation (4, 13, 30, 50) et prévue pour une transmission de la tension du deuxième réseau électrique.

2. Groupe à pompe centrifuge selon la revendication 1, **caractérisé en ce que** le dispositif de commutation (4, 13, 30, 51) est réalisé sous la forme d'un composant du moteur d'entraînement (3).

3. Groupe à pompe centrifuge selon la revendication 1 ou 2, **caractérisé en ce que** le deuxième réseau électrique est un réseau électrique à fréquence variable.

4. Groupe à pompe centrifuge selon la revendication 3, **caractérisé en ce que** le dispositif de commutation (4, 13, 30, 51) peut être relié avec un convertisseur de fréquence (20, 34) à la borne pour le deuxième réseau électrique (19) et **en ce que** le microcalculateur (5, 14) peut être relié avec le convertisseur de fréquence (20, 34) ou un dispositif de réglage (35) par le biais du système de bus (21, 31).

5. Groupe à pompe centrifuge selon l'une des revendications 1 à 4, **caractérisé en ce que** le dispositif de commutation (4, 13, 30, 51) possède des moyen pour des fonctions de surveillance et/ou de diagnostic.

6. Groupe à pompe centrifuge selon l'une des revendications 1 à 5, **caractérisé en ce que** le dispositif de commutation (4, 13, 30, 51) possède des moyens pour détecter (28) et/ou enregistrer (29) des valeurs de courant de moteur, de tension de moteur et/ou de facteurs de puissance.

7. Groupe à pompe centrifuge selon l'une des revendications 1 à 6, **caractérisé en ce que** le dispositif de commutation présente une unité de synchronisation (24, 45) qui détermine les phases et les fréquences respectives entre les réseaux électriques et qui, en cas d'égalité des phases et des fréquences, génère un signal de synchronisation, et **en ce qu'**une permutation entre les réseaux électriques a lieu avec lui.

8. Arrangement à plusieurs pompes comprenant un groupe à pompe centrifuge selon l'une des revendications 1 à 7 et un convertisseur de fréquence avec dispositif de réglage pour générer une tension de convertisseur de fréquence, **caractérisé en ce que** les dispositifs de commutation (4, 13, 30, 51) sont reliés entre eux et avec le convertisseur de fréquence (34) par le biais du système de bus série (21, 31), les dispositifs de commutation (4, 13, 30, 51) étant reliés par le biais des bornes (11, 12) du système de bus (21, 31), **en ce que** les dispositifs de commutation (4, 13, 30, 51) sont reliés aux bornes pour le premier réseau électrique (7) avec un premier réseau électrique à fréquence fixe, les dispositifs de commutation (4, 13, 30, 51) sont reliés à chaque fois au moyen de lignes (44) menant entre la borne de transmission de la tension du deuxième réseau électrique à l'un des dispositifs de commutation (4, 13, 30, 51) et la borne pour le deuxième réseau électrique (19) d'un autre des dispositifs de commutation (4, 13, 30, 51), et **en ce que** la tension du convertisseur de fréquence est associée temporairement aux groupes à pompe centrifuge (1) individuels, un groupe à pompe centrifuge (1) fonctionnant à chaque fois à une vitesse de rotation régulée.

9. Arrangement à plusieurs pompes selon la revendication 8, **caractérisé en ce que** l'un des dispositifs de commutation (4, 13, 30, 51) est réalisé sous la forme d'un dispositif de commutation prioritaire.

10. Arrangement à plusieurs pompes selon la revendication 9, **caractérisé par** une unité de division à fréquence fixe (36) comprenant des moyens pour laisser passer la tension du deuxième réseau électrique du convertisseur de fréquence (35) vers l'un des dispositifs de commutation (4, 13, 30, 51).

11. Procédé pour faire fonctionner un arrangement à plusieurs pompes selon l'une des revendications 8 à 10, **caractérisé en ce que** le microcalculateur (5, 14) commande l'un dispositifs de commutation de l'arrangement à plusieurs pompes ou le convertisseur de fréquence (35) avec dispositif de réglage (34), interprète les signaux d'entrée et commande une mise en circuit, mise hors circuit ou permutation des réseaux électriques de telle sorte que la tension de convertisseur de fréquence est associée temporairement aux groupes à pompe centrifuge (1) individuels, un groupe à pompe centrifuge (1) fonctionnant à chaque fois à une vitesse de rotation régulée.

12. Procédé selon la revendication 11, **caractérisé en ce que** la permutation entre les réseaux électriques est effectuée au moyen d'un signal de synchronisation lorsque les phases et les fréquences des réseaux électriques sont identiques.

13. Procédé selon la revendication 12, **caractérisé en ce que** la permutation entre les réseaux électriques est effectuée de telle sorte que le réseau électrique relié n'est déconnecté qu'après la mise en circuit réussie de l'autre réseau électrique.
